# EUROPÄISCHE PATENTSCHRIFT

(11) **EP 3 710 224 B1**
(45) Veröffentlichungstag und Bekanntmachung des Hinweises auf die Patenterteilung: **18.01.2023**
(21) Anmeldenummer: 18796820.1
(22) Anmeldetag: 23.10.2018
(51) Int. Cl.: B29C 48/62, B29C 48/67, B29C 48/53, B29C 48/65

(54) **PLASTIFIZIERSCHNECKE**
PLASTICATING SCREW
VIS SANS FIN DE MALAXAGE

(30) Priorität: 16.11.2017 AT 509612017
(43) Veröffentlichungstag der Anmeldung: 23.09.2020
(73) Patentinhaber: EREMA Engineering Recycling Maschinen und Anlagen Gesellschaft m.b.H., 4052 Ansfelden (AT)
(72) Erfinder: MIETHLINGER, Jürgen, 4851 Gampern (AT); LUGER, Hans Jürgen, 4020 Linz (AT)
(74) Vertreter: Wildhack & Jellinek
(86) Internationale Anmeldenummer: PCT/AT2018/050020
(87) Internationale Veröffentlichungsnummer: WO 2019/094996

(56) Entgegenhaltungen:
- CN-A- 101 428 468
- DE-A1- 2 362 806
- FR-A1- 2 224 283
- JP-A- 2001 062 897
- JP-U- S61 158 417
- US-A- 4 840 492

## Beschreibung

### Technisches Gebiet

Die Erfindung bezieht sich auf eine Plastifizierschnecke mit einem um einen Schneckenkern spiralförmig umlaufenden und seitlich von einem Steg begrenzten Schneckengang, der über seine Längsrichtung verteilte, sich quer über den Schneckengang erstreckende Strömungselemente mit einem Talabschnitt und einem in Längsrichtung radial ansteigenden Kompressionsabschnitt aufweist, wobei der Kompressionsabschnitt wenigstens eine zum Steg hin geneigte Anlauffläche bildet, an die in Längsrichtung ein Plateau zur Strömungsausbildung angeschlossen ist.

### Stand der Technik

Es sind Plastifizierschnecken bekannt, die in ihren Schneckengängen Strömungselemente mit einem Talabschnitt und einem in Längsrichtung radial ansteigenden und wieder absteigenden Kompressionsabschnitt, sogenannte Wave-Elemente, ausbilden (US 6176606 B1, US 5375992 B1). Diese Wave-Elemente haben die Aufgabe, das Feststoffbett aufzuteilen und dadurch einen effizienteren Aufschmelzprozess durch Oberflächenvergrößerung der Feststoffanteile herbeizuführen. Ein zu hoher Feststoffanteil führt in der Kompression von Wave-Elementen zu Verstopfungen des Fließquerschnittes. In diesem Fall ist die Förderkapazität höher als die Aufschmelzkapazität. In Folge treten Druckschwankungen auf, die Schwankungen im Endprodukt auslösen und zum Ausschuss führen. Folglich können solche Wave-Elemente nur sinnvoll unterhalb eines gewissen und vergleichsweise geringem Feststoffanteils eingesetzt werden, wie es der Fall bei vergleichsweise geringem Ausstoß ist. Somit kann dort zwar die Aufschmelzleistung gegenüber konventionellen Schneckenkonzepten erhöht werden, nachteilig ist jedoch, dass von der Feststoffförderzone bis zur Aufschmelzzone eine Kompaktierung des Schüttgutes zu einem Feststoffbett stattfindet, das aufgrund seiner geringen Kontaktfläche mit der Schmelze nur mit unproportional hohem Energieeintrag oder einer entsprechend langen Plastifizierschnecke aufgeschmolzen werden kann.

Aus dem Stand der Technik sind zudem Plastifizierschnecken bekannt, deren Kompressionsabschnitte wenigstens eine zum Steg hin geneigte Anlauffläche bilden, an die in Längsrichtung ein Plateau zur Strömungsausbildung angeschlossen ist (DE 2542515 A1, DE 2256902 B1). Weitere Plastifizierschnecken sind aus den Druckschriften JPS61158417 U, FR2224283 A1, DE2362806 A1, JP2001062897 A und CN101428 468 A bekannt.

### Darstellung der Erfindung

Der Erfindung liegt somit die Aufgabe zugrunde, eine Plastifizierschnecke der eingangs erwähnten Art so auszugestalten, dass deren Länge reduziert und trotz geringem Energieeintrag ein gutes Aufschmelzverhalten erreicht werden kann.

Der Erfindung liegt die Erkenntnis zugrunde, dass die Ausbildung eines Dehnströmungsprofils im Feststoff-Schmelze-Gemisch eine Zerkleinerung von Agglomeraten besonders begünstigt und zu einem verbesserten Aufschmelzverhalten führt. Eine solche Dehnströmung kann dadurch induziert werden, dass erfindungsgemäß der Kompressionsabschnitt wenigstens eine zum Steg hin geneigte Anlauffläche bildet, an die in Längsrichtung ein Plateau zur Strömungsausbildung angeschlossen ist, wodurch die Schmelze über die Breite des Schneckenganges zu unterschiedlichen Zeitpunkten auf die geneigte Anlauffläche des Kompressionsabschnittes trifft. Die Neigung der Anlauffläche zum Steg hin ist dabei so zu verstehen, dass im Falle einer ebenen Anlauffläche der Normalvektor dieser Fläche die durch die Stege aufgespannten Seitenebenen schneidet. Bei herkömmlichen Wave-Elementen sind die Normalvektoren der Anlaufflächen im Gegensatz dazu parallel zu den beiden Seitenebenen ausgerichtet. Die sich zufolge der erfindungsgemäßen Merkmale einstellende Dehnströmung kann sich allerdings nur dann voll ausbilden, wenn es nach dem Kompressionsabschnitt zu einer Strömungsstabilisierung kommt, die durch das erfindungsgemäße Plateau erreicht wird. Da die Schmelze durch die erfindungsgemäßen Merkmale über ihre Breite auch einer zeitversetzten Kompression unterliegt, bildet sich durch die unterschiedlichen Druckniveaus entlang der Breite des Schneckenganges zusätzlich zur oben beschriebenen Dehnströmung eine Sekundärströmung aus. Dies führt in einer synergetischen Gesamtwirkung zu einem besseren Aufschmelzverhalten, weshalb auf zusätzlichen Energieeintrag verzichtet werden kann. Da die erfindungsgemäßen Strömungselemente eine effizientere Aufteilung des Feststoffbetts erlauben und daher bei gleicher Schneckenlänge für vergleichsweise höhere Feststoffanteile und Ausstöße geeignet sind, kann die Plastifiziereinheit bei gleichem Ausstoß und Feststoffanteil geringere Baulängen aufweisen. Besonders vorteilhafte Bedingungen hinsichtlich des Aufschmelzvorganges können sich demnach bei einer Kombination mehrerer in Serie geschalteter Strömungselemente ergeben.

Um die erfindungsgemäßen Strömungselemente bereits näher zur Feststoffförderzone anordnen zu können und damit das Aufschmelzverhalten bereits frühzeitig positiv beeinflussen zu können, wird vorgeschlagen, dass der Kompressionsabschnitt der Strömungselemente wenigstens zwei je zu gegenüberliegenden Stegabschnitten hin geneigte Anlaufflächen bildet, die einen gegen die Strömungsrichtung gerichteten Keil bilden. Die sich dadurch ergebenden pflugförmigen Kompressionsabschnitte teilen und brechen das Feststoff-Schmelze-Gemisch auf, sodass die Feststoffpartikel in einer umgebenden Schmelzematrix dispergiert werden. Dadurch steht für den Aufschmelzvorgang eine wesentlich höhere Oberfläche der Feststoffe zur Verfügung, wodurch das Aufschmelzverhalten weiter verbessert wird. Zur Verstärkung des Effektes können auch mehrere pflugförmige Keile vorgesehen werden, die sich über die Breite des Schneckenganges verteilen. Insbesondere kann es sich als vorteilhaft erweisen, einen mittig angeordneten Hauptkeil mit ein oder mehreren dazu symmetrisch angeordneten Nebenkeilen vorzusehen. Neben dem Aufteilen bzw. Aufbrechen des Feststoffbettes ergibt sich durch die keilförmige Anordnung der Anlaufflächen der zusätzliche technische Effekt, dass eine bereits vorhandene rotatorische Querströmung aufgeteilt und wieder zusammengeführt wird, um dadurch den Schmelzeabtransport von der Oberfläche der Feststoffpartikel zu verstärken. Durch die strömungsgünstige Keilform wird dabei gegenüber bekannten Stromstörelementen das Strömungsverhalten nicht negativ beeinflusst. Insgesamt können durch die erfindungsgemäßen Merkmale die Strömungselemente nicht nur in der Aufschmelzzone, sondern insbesondere auch in der Schmelzeförderzone der Plastifizierschnecke vorteilhaft als dispergierende und distributive Mischteile eingesetzt werden.

Um die Aufteilung von kompaktierten Feststoffbetten noch effizienter zu gestalten, können die Anlaufflächen der Kompressionsabschnitte in Längsrichtung des Schneckenganges konkav oder konvex gekrümmt sein. Bei einer auf den Längsquerschnitt bezogenen konkaven Krümmung kann die Ausbildung einer Dehnströmung begünstigt werden, indem durch einen zunächst weniger starken Anstieg der Anlauffläche des Kompressionsabschnitts ein Abreißen der Dehnströmung vermieden wird. Umgekehrt kann bei einer konvexen Ausführung des Längsquerschnittes der Anlaufflächen durch abruptere Strömungsumlenkungen das Strömungselement intensiver auf das Feststoffbett einwirken.

Um zusätzlich zu den beschriebenen Wirkungen mit Hilfe der erfindungsgemäßen Strömungselemente die auftretenden Scher- und Dehnkräfte weiter zu erhöhen, kann das Plateau zur Strömungsausbildung in Längsrichtung des Schneckenganges wellenförmig ausgebildet sein. Überdies kann man auf einem derartigen Plateau auch Wave-Elemente anordnen, sodass die Homogenisierung weiter verbessert wird.

Um aufgrund einer höheren Energiedissipation den Durchsatz zu erhöhen, kann die erfindungsgemäße Plastifizierschnecke wenigstens zwei voneinander durch einen gemeinsamen Steg getrennte Schneckengänge ausbilden, in denen jeweils zueinander auf Lücke versetzte Strömungselemente angeordnet sind.

Damit es während des Aufschmelzvorgang zu einer verbesserten Homogenisierung des Feststoff-Schmelze-Gemisches in den mehrgängigen Ausführungsformen der erfindungsgemäßen Plastifizierschnecke kommt, wird vorgeschlagen, dass der gemeinsame Steg der Schneckengänge in einem den jeweiligen Strömungselementen in Strömungsrichtung vorgelagerten Bereich durchbrochen ist. Dadurch kann sich ein komplexeres und damit für den Wirkungsgrad der Plastifiziereinheit vorteilhafteres Strömungsprofil ausbilden. Aufgrund dessen kommt es zu einem effizienteren Aufschmelzvorgang und zu einer verbesserten Homogenisierung des Feststoff-Schmelze-Gemisches bzw. der Schmelze.

### Kurze Beschreibung der Erfindung

In der Zeichnung ist der Erfindungsgegenstand beispielsweise dargestellt. Es zeigen
- Fig. 1: eine schematische Ansicht zweier Schneckengänge einer erfindungsgemäßen Plastifizierschnecke,
- Fig. 2: ein Schnitt entlang der Linie II-II der Fig.1 in einem größeren Maßstab,
- Fig. 3: ein Schnitt entlang der Linie III-III der Fig.1 in einem größeren Maßstab,
- Fig. 4: ein der Fig.2 entsprechender Schnitt einer alternativen Ausführungsform des erfindungsgemäßen Strömungselementes mit konvexen Anlaufflächen,
- Fig. 5: ein der Fig.2 entsprechender Schnitt einer alternativen Ausführungsform des erfindungsgemäßen Strömungselementes mit konkaven Anlaufflächen und
- Fig. 6: eine der Fig. 1 entsprechende Ansicht zweier Schneckengänge einer erfindungsgemäßen Plastifizierschnecke in einer alternativen Ausführungsform.

### Wege zur Ausführung der Erfindung

Eine erfindungsgemäße Plastifizierschnecke weist einen spiralförmig um einen Schneckenkern umlaufenden und seitlich von einem Steg 1, 2 begrenzten Schneckengang auf. Über die Längsrichtung des Schneckenganges sind sich in einer Querrichtung über den Schneckengang erstreckende Strömungselemente 3, 4 verteilt.

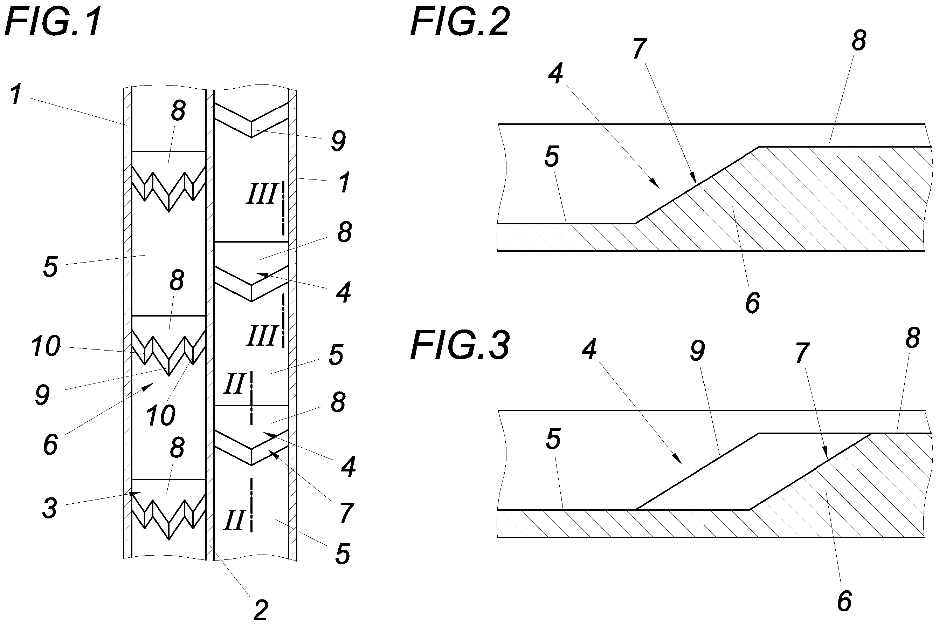

Wie insbesondere den Fig. 2 - 5 entnommen werden kann, weisen diese Strömungselemente 3, 4 einen Talabschnitt 5 und einen entlang des Schneckenganges in radialer Richtung ansteigenden Kompressionsabschnitt 6 auf, der wenigstens eine zum Steg 1, 2 hin geneigte Anlauffläche 7 bildet. Anschließend an den Kompressionsabschnitt 6 befindet sich ein zur Schneckenkernoberfläche paralleles Plateau 8, an welches wiederum ein Talabschnitt 5 zur Dekompression anschließt. Die Ausdehnung in radialer Richtung der Strömungselemente 3, 4 ist dabei geringer als die Höhe des Schneckengangs.

Eine in Längsrichtung des Schneckenganges beförderte Strömung eines Feststoff-Schmelze-Gemisches bzw. einer Schmelze wird zuerst über den Talabschnitt 5 eines Strömungselementes 3, 4 gefördert und trifft anschließend auf die Anlaufflächen 7 des Kompressionsabschnitts 6. Danach fließt die Strömung weiter über das Plateau 8, bis sie schließlich zur Dekompression wieder in einen Talabschnitt 5 mündet.

Um ein sich einstellendes Feststoffbett aufteilen und -brechen zu können, kann der Kompressionsabschnitt 6 wenigstens zwei je zu gegenüberliegenden Stegabschnitten 1, 2 hin geneigte Anlaufflächen 7 aufweisen, die einen gegen die Strömungsrichtung des Feststoff-Schmelze-Gemisches bzw. der Schmelze gerichteten Keil 9 bilden. Erfindungsgemäß können auch mehrere solcher Keile 9, 10 vorgesehen sein, die sich gleichmäßig über die Breite eines Schneckenganges verteilen und dabei einen Hauptkeil 9 mit mehreren Nebenkeilen 10 bilden. Eine derartige Ausführungsform ist in der Zeichnung beispielsweise bei den Strömungselementen 3 dargestellt.

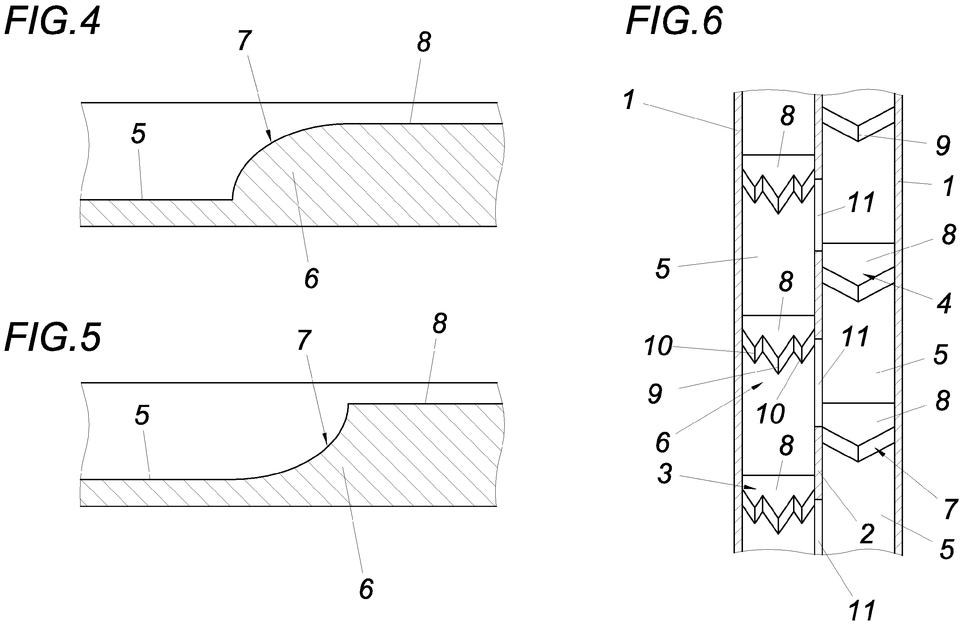

Wie bereits oben näher ausgeführt können die Anlaufflächen 7 entweder wie in der Fig. 4 dargestellt konvex oder wie in der Fig. 5 dargestellt konkav ausgebildet werden, um die sich erfindungsgemäß einstellenden Strömungsprofile entsprechende günstig zu beeinflussen.

Obwohl dies in der Zeichnung nicht gesondert dargestellt ist, kann das Plateau 8 wellenförmig ausgebildet sein oder grundsätzlich aus dem Stand der Technik bekannte Wave-Elemente aufweisen um die in der Schmelze auftretenden Scherund Dehnkräfte zu erhöhen.

Gemäß einer weiteren Ausführungsform kann die erfindungsgemäße Plastifizierschnecke wenigstens zwei in Längsrichtung parallele Schneckengänge ausbilden, die durch einen gemeinsamen Steg 2 voneinander getrennt sind. Insbesondere wird dies in Fig. 1 verdeutlicht, wo die Strömungselemente 3 des einen Schneckenganges zu den Strömungselementen 4 des anderen Schneckenganges auf Lücke versetzt sind.

In einer in Fig. 6 dargestellten alternativen Ausführungsform zu den zwei in Fig. 1 gezeigten Schneckengängen, kann der gemeinsame Steg 2 der Schneckengänge in einem den jeweiligen Strömungselementen 3, 4 in Strömungsrichtung vorgelagerten Bereich Durchbrüche 11 aufweisen.

## Patentansprüche

1. Plastifizierschnecke mit einem um einen Schneckenkern spiralförmig umlaufenden und seitlich von einem Steg (1), (2) begrenzten Schneckengang, der über seine Längsrichtung verteilte, sich quer über den Schneckengang erstreckende Strömungselemente (3), (4) mit einem Talabschnitt (5) und einem in Längsrichtung radial ansteigenden Kompressionsabschnitt (6) aufweist, wobei der Kompressionsabschnitt (6) wenigstens eine zum Steg (1), (2) hin geneigte Anlauffläche (7) bildet, an die in Längsrichtung ein Plateau (8) zur Strömungsausbildung angeschlossen ist, **dadurch gekennzeichnet, dass** sich die Strömungselemente (3), (4) über die Breite des Schneckenganges erstrecken, wobei der Kompressionsabschnitt (6) wenigstens zwei je zu gegenüberliegenden Stegabschnitten (1), (2) hin geneigte Anlaufflächen (7) aufweist, die einen gegen die Strömungsrichtung gerichteten Keil (9), (10) bilden, und wobei die Strömungselemente (3), (4) zumindest in der Aufschmelzzone der Plastfizierschnecke vorgesehen sind.

2. Plastifizierschnecke nach Anspruch 1, **dadurch gekennzeichnet, dass** die Anlaufflächen (7) der Kompressionsabschnitte (6) in Längsrichtung des Schneckenganges konkav oder konvex gekrümmt sind.

3. Plastifizierschnecke nach Anspruch 1 oder 2, **dadurch gekennzeichnet, dass** das Plateau (8) zur Strömungsausbildung in Längsrichtung des Schneckenganges wellenförmig ausgebildet ist.

4. Plastifizierschnecke nach einem der Ansprüche 1 bis 3, **dadurch gekennzeichnet, dass** die Plastifizierschnecke wenigstens zwei voneinander durch einen gemeinsamen Steg (2) getrennte Schneckengänge ausbildet, in denen jeweils zueinander auf Lücke versetzte Strömungselemente (3), (4) angeordnet sind.

5. Plastifizierschnecke nach Anspruch 4, **dadurch gekennzeichnet, dass** der gemeinsame Steg (2) in einem den jeweiligen Strömungselementen (3), (4) in Strömungsrichtung vorgelagerten Bereich durchbrochen ist.

## Claims

1. Plasticating screw having a screw thread, surrounding a screw core in a spiral shape and delimited laterally by a web (1), (2), which has flow elements (3), (4), extending transversely across the screw thread, having a valley portion (5) and a compression portion (6) rising radially in longitudinal direction, wherein the compression portion (6) forms at least one run-on surface (7) inclined towards the web (1), (2), to which is attached in longitudinal direction a plateau (8) for flow formation, **characterised in that** the flow elements (3), (4) extend across the breadth of the screw thread, wherein the compression portion (6) has at least two run-on surfaces (7), inclined towards oppositelysituated web portions (1), (2), which form a wedge (9), (10) aligned against the flow direction, and wherein the flow elements (3), (4) are provided at least in the melt zone of the plasticating screw.

2. Plasticating screw according to claim 1, **characterised in that** the run-on surfaces (7) of the compression portions (6) are concavely or convexly curved in longitudinal direction of the screw thread.

3. Plasticating screw according to claim 1 or 2, **characterised in that** the plateau (8) for flow formation is designed in an undulating shape in the longitudinal direction of the screw thread.

4. Plasticating screw according to any of claims 1 to 3, **characterised in that** the plasticating screw forms at least two screw threads, separated from one another by a common web (2), in which are arranged flow elements (3), (4) each offset to the other on gap.

5. Plasticating screw according to claim 4, **characterised in that** the common web (2) is interrupted in a region situated upstream in flow direction from the respective flow elements (3), (4).

## Revendications

1. Vis de plastification avec un pas de vis tournant autour d'un noyau de vis en spirale et délimité latéralement par une nervure (1), (2) qui présente des éléments d'écoulement (3), (4) répartis sur son sens longitudinal, s'étendant transversalement au pas de vis avec une section en creux (5) et une section de compression (6) croissant radialement dans le sens longitudinal, dans laquelle la section de compression (6) forme au moins une surface d'arrêt (7) inclinée vers la nervure (1), (2), à laquelle un plateau (8) est raccordé dans le sens longitudinal pour la réalisation de l'écoulement, **caractérisée en ce que** les éléments d'écoulement (3), (4) s'étendent sur la largeur du pas de vis, dans laquelle la section de compression (6) présente au moins deux surfaces d'arrêt (7) inclinées chacune vers des sections de nervure (1), (2) à opposer qui forment un coin (9), (10) dirigé contre le sens d'écoulement, et dans laquelle les éléments d'écoulement (3), (4) sont prévus au moins dans la zone de fusion de la vis de plastification.

2. Vis de plastification selon la revendication 1, **caractérisée en ce que** les surfaces d'arrêt (7) des sections de compression (6) sont courbées de manière concave ou convexe dans le sens longitudinal du pas de vis.

3. Vis de plastification selon la revendication 1 ou 2, **caractérisée en ce que** le plateau (8) est réalisé de manière ondulée pour la réalisation de l'écoulement dans le sens longitudinal du pas de vis.

4. Vis de plastification selon l'une quelconque des revendications 1 à 3, **caractérisée en ce que** la vis de plastification réalise au moins deux pas de vis séparés l'un de l'autre par une nervure commune (2), dans lesquels sont agencés des éléments d'écoulement (3), (4) en déport respectivement l'un par rapport à l'autre en quinconce.

5. Vis de plastification selon la revendication 4, **caractérisée en ce que** la nervure commune (2) est interrompue dans une zone logée en amont des éléments d'écoulement (3), (4) respectifs dans le sens d'écoulement.
